(19) Europäisches Patentamt
European Patent Office
Office européen des brevets

(11) EP 3 868 578 B1

(12) EUROPEAN PATENT SPECIFICATION

(45) Date of publication and mention
of the grant of the patent:
**03.12.2025 Bulletin 2025/49**

(21) Application number: **19873850.2**

(22) Date of filing: **04.10.2019**

(51) International Patent Classification (IPC):
*B60C 15/06* (2006.01)      *B60C 1/00* (2006.01)
*C08K 3/013* (2018.01)      *C08K 3/04* (2006.01)
*C08L 9/00* (2006.01)      *C08L 21/00* (2006.01)
*C08L 7/00* (2006.01)

(52) Cooperative Patent Classification (CPC):
(C-Sets available)
**C08L 21/00; C08K 3/04; C08L 7/00; C08L 9/00;**
B60C 2001/005; B60C 2015/0614; C08K 2201/006
(Cont.)

(86) International application number:
**PCT/JP2019/039340**

(87) International publication number:
**WO 2020/080150 (23.04.2020 Gazette 2020/17)**

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2018 JP 2018195383**

(43) Date of publication of application:
**25.08.2021 Bulletin 2021/34**

(73) Proprietor: **Sumitomo Rubber Industries, Ltd.
Kobe-shi, Hyogo 651-0072 (JP)**

(72) Inventor: **NAKAJIMA, Hiroki
Kobe-shi, Hyogo 651-0072 (JP)**

(74) Representative: **TBK
Bavariaring 4-6
80336 München (DE)**

(56) References cited:
**EP-A1- 3 178 880        EP-A1- 3 196 053
EP-A1- 3 222 659        JP-A- 2004 074 935
JP-A- 2005 271 857      JP-A- 2006 063 143
JP-A- 2006 193 061      JP-A- 2009 007 455
JP-A- 2010 058 782      JP-A- 2013 177 633
JP-A- 2018 154 181**

(52) Cooperative Patent Classification (CPC): (Cont.)

C-Sets
C08K 3/04, C08L 9/00;
C08L 7/00, C08L 9/00, C08L 15/00, C08L 91/00,
C08L 91/06, C08L 45/00, C08K 5/09, C08K 3/22,
C08K 3/06, C08K 5/18, C08K 5/47;
C08L 7/00, C08L 15/00, C08L 9/00, C08L 91/00,
C08L 45/00, C08L 91/06, C08K 3/04, C08K 5/09,
C08K 3/22, C08K 3/06, C08K 5/18, C08K 5/47;
C08L 7/00, C08L 15/00, C08L 9/00, C08L 91/00,
C08L 45/00, C08L 91/06, C08K 5/09, C08K 3/22,
C08K 3/06, C08K 5/18, C08K 5/47;
C08L 7/00, C08L 15/00, C08L 9/00, C08L 91/00,

C08L 91/06, C08L 45/00, C08K 3/04, C08K 5/09,
C08K 3/22, C08K 3/06, C08K 5/18, C08K 5/47;
C08L 9/00, C08L 7/00, C08L 15/00, C08L 91/00,
C08L 45/00, C08L 91/06, C08K 5/09, C08K 3/22,
C08K 3/06, C08K 5/18, C08K 5/47;
C08L 9/00, C08L 7/00, C08L 15/00, C08L 91/00,
C08L 91/06, C08L 45/00, C08K 5/09, C08K 3/22,
C08K 3/06, C08K 5/18, C08K 5/47;
C08L 15/00, C08L 7/00, C08L 9/00, C08L 91/00,
C08L 45/00, C08L 91/06, C08K 3/04, C08K 5/09,
C08K 3/22, C08K 3/06, C08K 5/18, C08K 5/47;
C08L 15/00, C08L 7/00, C08L 9/00, C08L 91/00,
C08L 91/06, C08L 45/00, C08K 3/04, C08K 5/09,
C08K 3/22, C08K 3/06, C08K 5/18, C08K 5/47

**Description**

TECHNICAL FIELD

The present invention relates to a tire comprising a clinch apex composed of a rubber composition for a clinch apex, the rubber composition having a predetermined rubber physical property.

BACKGROUND ART

In recent years, in the fuel efficiency-oriented market, there has been a strong demand for low heat generation of a tire alone. As a means for responding to such market needs, methods to improve low heat generation and abrasion resistance properties of a cap tread or to make rubber gauge of a cap tread as thin as possible are generally and widely known which cap tread is the only member contacting with the ground in the tire. However, there is a limit to thinning of the rubber gauge itself, and in some markets, a tire with a shallow groove may not be accepted since it gives the impression that the groove disappears early. Furthermore, in recent tires, progress of a tread rubber has been remarkable, and along with the improvement of the tread rubber in low heat generation, contribution of other members to heat generation has been becoming a nonnegligible level.

As a technique to achieve low fuel consumption in a clinch apex part of a tire, it is most effective to reduce an amount of a reinforcing agent compounded in the clinch apex. However, at the same time, the physical properties that represent hardness such as rigidity or modulus of a compounded rubber often deteriorate, and when steering stability is evaluated by mounting tires on an actual vehicle, lateral rigidity during turning often deteriorates, resulting in a poor steering stability. Therefore, Patent Document 1 discloses a rubber composition for a clinch apex having a particular viscoelastic property by compounding a polybutadiene rubber having a large amount of linear components and/or a syndiotactic-1,2-polybutadiene rubber for the purpose of simultaneously improving steering stability and rolling resistance property of a tire.

PRIOR ART DOCUMENT

Patent Document

Patent Document 1: JP 2004-106796 A

SUMMARY OF THE INVENTION

PROBLEM TO BE SOLVED BY THE INVENTION

However, Patent Document 1 does not refer to a viscoelastic physical property at a higher temperature, and there is still room for improvement in its high-speed durability.

Therefore, it is an object of the present invention to provide a tire having improved low heat generation and high-speed durability while maintaining functions as a clinch apex such as steering stability and riding comfort.

MEANS TO SOLVE THE PROBLEM

In view of the above-described problem, as a result of intensive studies while focusing on an increasing influence in heat generation of a clinch apex which repeatedly deforms while being sandwiched between rims when a tire rolls, the present inventor has found that heat generation around a bead portion particularly during running at a high speed can be suppressed and that the above-described problem can be solved by providing a tire as defined in claim 1, and conducted further studies to complete the present invention.

That is, the present invention relates to:

[1] A tire comprising a clinch apex composed of a rubber composition for a clinch apex, the rubber composition having 6.0 to 12.0 MPa, preferably 7.0 to 12.0 MPa, more preferably 8.0 to 11.0 MPa of a complex elastic modulus E* at 70°C, a frequency of 10 Hz and 1% strain (E* (70°C)), 0.10 or less, preferably 0.04 to 0.09, more preferably 0.05 to 0.08 of a loss tangent tan $\delta$ at 70°C, a frequency of 10 Hz and 1% strain (tan $\delta$ (70°C)), and 0.06 or less, more preferably 0.05 or less of tan $\delta$ at 100°C, a frequency of 10 Hz and 0.5% strain (tan $\delta$ (100°C)), wherein the rubber composition for a clinch apex comprises 45 parts by mass or more of carbon black, 40% by mass or more of a butadiene rubber, and the butadiene rubber comprises a butadiene rubber comprising 1,2-syndiotactic polybutadiene crystal (SPB), and satisfying the following equation (1):

$$\text{Equation (1): } \tan \delta \, (70°C)/E^* \, (70°C) \times 1000 \leqq 10.0$$

(preferably $3.0 \leqq \tan \delta \, (70°C)/E^* \, (70°C) \times 1000 \leqq 9.0$, more preferably $4.5 \leqq \tan \delta \, (70°C)/E^* \, (70°C) \times 1000 \leqq 8.0$),

[2] The tire of [1] above, wherein the rubber composition for a clinch apex comprises 45 to 55 parts by mass, preferably 45 to 53 parts by mass, more preferably 45 to 50 parts by mass of carbon black having a DBP oil absorption of 110 ml/100 g or more, preferably 115 to 170 ml/100 g, more preferably 120 to 160 ml/100 g based on 100 parts by mass of a diene-based rubber component, and a content percentage of carbon black in the rubber composition is 26.0 to 32.0% by mass, preferably 28.0 to 31.5% by mass, more preferably 29.0 to 31.0% by mass.

EFFECTS OF THE INVENTION

According to the present invention, a tire comprising a clinch apex composed of a rubber composition for a clinch apex, the rubber composition having 6.0 to 12.0 MPa of a complex elastic modulus $E^*$ at 70°C, a frequency of 10 Hz and 1% strain ($E^* \, (70°C)$), 0.10 or less of a loss tangent $\tan \delta$ at 70°C, a frequency of 10 Hz and 1% strain ($\tan \delta \, (70°C)$), and 0.06 or less of $\tan \delta$ at 100°C, a frequency of 10 Hz and 0.5% strain ($\tan \delta \, (100°C)$), and further satisfying Equation (1): $\tan \delta \, (70°C)/E^* \, (70°C) \times 1000 \leqq 10.0$, can improve in low heat generation and high-speed durability while maintaining functions as a clinch apex such as steering stability and riding comfort of a tire.

BRIEF DESCRIPTION OF THE DRAWINGS

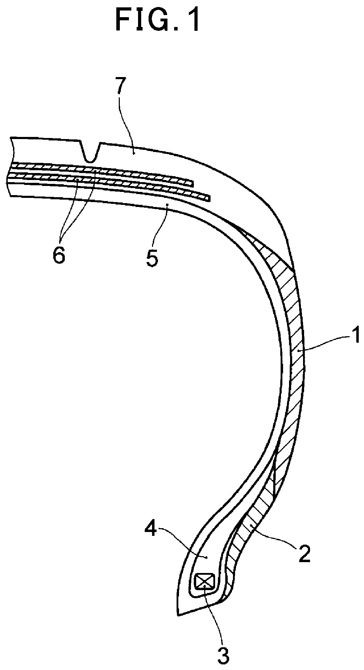

FIG. 1 is a schematic partial cross-sectional view of a pneumatic tire according to an embodiment of the present invention.

EMBODIMENT FOR CARRYING OUT THE INVENTION

The tire of the present disclosure is characterized by having a clinch apex composed of a rubber composition for a clinch apex, the rubber composition having 6.0 to 12.0 MPa of a complex elastic modulus $E^*$ at 70°C, a frequency of 10 Hz and 1% strain ($E^* \, (70°C)$), 0.10 or less of a loss tangent $\tan \delta$ at 70°C, a frequency of 10 Hz and 1% strain ($\tan \delta \, (70°C)$), and 0.06 or less of $\tan \delta$ at 100°C, a frequency of 10 Hz and 0.5% strain ($\tan \delta \, (100°C)$), and further satisfying Equation (1): $\tan \delta \, (70°C)/E^* \, (70°C) \times 1000 \leqq 10.0$. With this feature, heat generation around a bead portion during running at a high speed can be suppressed to improve a high-speed durability without compromising functions as a clinch apex equivalent to a conventional one as compared with a tire using a clinch apex having a similar compounding. Specifically, it is considered that a rising speed of a temperature due to running can be suppressed by satisfying Equation (1) and a final reaching temperature can be lowered as compared with a conventional case by setting $\tan \delta \, (100°C)$ to 0.06 or less, thereby synergistically improving the high-speed durability.

The complex elastic modulus $E^*$ at 1% of a dynamic strain amplitude at 70°C (also referred to as $E^* \, (70°C)$) of the rubber composition for a clinch apex used in the tire of the present disclosure is 6.0 MPa or more, preferably 7.0 or more, more preferably 8.0 or more. When $E^* \, (70°C)$ is less than 6.0 MPa, steering stability tends to deteriorate. Furthermore, $E^* \, (70°C)$ is 12.0 MPa or less, more preferably 11.0 or less. When $E^* \, (70°C)$ exceeds 13.0 MPa, riding comfort tends to deteriorate. Besides, $E^* \, (70°C)$ is a value obtained by a measuring method which will be described later in Examples.

The loss tangent $\tan \delta$ at 1% of a dynamic strain amplitude at 70°C (also referred to as $\tan \delta \, (70°C)$) of the rubber composition for a clinch apex used in the tire of the present disclosure is 0.10 or less, preferably 0.09 or less, more preferably 0.08 or less, more preferably 0.07 or less. When $\tan \delta \, (70°C)$ exceeds 0.10, heat generation becomes high, and rolling resistance and high-speed durability tend to be deteriorated. Furthermore, $\tan \delta \, (70°C)$ is preferably 0.04 or more, more preferably 0.05 or more. When $\tan \delta \, (70°C)$ is 0.04 or more, a moderate damping property can be obtained, and riding comfort tends to be less likely to be deteriorated. Here, $\tan \delta \, (70°C)$ is preferably 0.03 or more, or 0.05 or less, from the viewpoint that effects of the present disclosure can be better exhibited. Besides, $\tan \delta \, (70°C)$ is a value obtained by a measuring method which will be described later in Examples.

A relationship between $E^* \, (70°C)$ and $\tan \delta \, (70°C)$ of the rubber composition for a clinch apex used in the tire of the present disclosure satisfies Equation (1): $\tan \delta \, (70°C)/E^* \, (70°C) \times 1000 5 \leqq 10.0$, and $\tan \delta \, (70°C)/E^* \, (70°C) \times 1000$ is preferably 9.0 or less, more preferably 8.0 or less. When $\tan \delta \, (70°C)/E^* \, (70°C) \times 1000$ exceeds 10.0, deformation in rolling becomes too large, so there are tendencies that fuel efficiency of the tire cannot be sufficiently improved and that a rising speed of a temperature due to running cannot be sufficiently suppressed. Furthermore, $\tan \delta \, (70°C)/E^* \, (70°C) \times 1000$ is preferably 3.0 or more, more preferably 4.3 or more, more preferably 4.5 or more. When $\tan \delta \, (70°C)/E^* \, (70°C) \times 1000$ is 3.0 or more, there is a tendency that a sufficient riding comfort can be secured. Here, Equation (1) is preferably $2.0 \leqq \tan \delta \, (70°C)/E^* \, (70°C) \times 1000 \leqq 10.0$, more preferably $2.0 \leqq \tan \delta \, (70°C)/E^* \, (70°C) \times 1000 \leqq 4.2$, from the viewpoint that effects of the present disclosure can be better exhibited.

The loss tangent tan δ at 0.5% of a dynamic strain amplitude at 100°C (also referred to as tan δ (100°C)) of the rubber composition for a clinch apex used in the tire of the present disclosure is 0.06 or less, more preferably 0.05 or less, further preferably 0.03 or less. When tan δ (100°C) exceeds 0.07, heat generation around a bead portion during high-speed running cannot be sufficiently suppressed, and there is a tendency that a sufficient effect of improving high-speed durability cannot be obtained. Furthermore, a lower limit of tan δ (100°C) does not particularly have to be set, but it is preferably 0.02 or more from the viewpoint of processability. Besides, tan δ (100°C) is a value obtained by a measuring method which will be described later in Examples.

The rubber composition for a clinch apex used in the tire of the present disclosure, having 6.0 to 12.0 MPa of a complex elastic modulus E* at 70°C and 1% strain (E* (70°C)), 0.10 or less of a loss tangent tan δ at 70°C and 1% strain (tan δ (70°C)), and 0.06 or less of tan δ at 100°C and 0.5% strain (tan δ (100°C)), and satisfying Equation (1): tan δ (70°C)/E* (70°C)×1000 ≦ 10.0, can be provided without imposing an excessive burden on those skilled in the art by, for example, using a modified butadiene rubber and a butadiene rubber comprising a syndiotactic polybutadiene crystal and adjusting amounts of other compounding agents such as carbon black, oil, a vulcanizing agent, etc.

<Rubber composition for clinch apex>

(Rubber component)

A rubber component is not particularly limited apart from what is recited in claim 1, and diene-based rubbers such as a natural rubber (NR), an isoprene rubber (IR), and a butadiene rubber (BR) can be used. As the rubber component, one or two or more kinds thereof can be used. Among them, those made of a natural rubber and a butadiene rubber or those comprising a butadiene rubber are preferable, from the reason that effects of the present disclosure can be better exhibited.

A NR is not particularly limited, and those commonly used in the rubber industry can be used, specific examples of which include RSS #3, TSR20, and the like.

A content of the NR in the rubber component is, not particularly limited but, preferably 20% by mass or more, more preferably 24% by mass or more, more preferably 28% by mass or more, further preferably 30% by mass or more, from the viewpoint of sufficient effects of the present disclosure. Furthermore, the content is preferably 60% by mass or less, more preferably 50% by mass or less, more preferably 40% by mass or less, further preferably 35% by mass or less, from the viewpoint of fuel efficiency.

A BR is not particularly limited apart from what is recited in claim 1, and those common in the tire industry can be used, such as, for example, a BR having a content of cis-1,4 bond of less than 50% (a low cis BR), a BR having a content of cis 1,4 bond of 90% or more (a high cis BR), a rare-earth-based butadiene rubber synthesized using a rare-earth element-based catalyst (a rare-earth-based BR), a BR comprising a syndiotactic polybutadiene crystal (a SPB-comprising BR), and a modified BR (a high cis modified BR, a low cis modified BR). Among these BRs, it is preferable to use a modified BR and a SPB-comprising BR in combination, use a modified BR and a rare-earth-based BR in combination, use a modified BR, or use a rare-earth-based BR. In an embodiment, as the BR, a modified BR and a rare-earth-based BR only, a modified BR and a SPB-comprising BR only, a modified BR only, or a rare-earth-based BR only is preferred. As the BR, one or two or more kinds thereof can be used.

Examples of the SPB-comprising BR include those in which a 1,2-syndiotactic polybutadiene crystal is chemically bonded and dispersed with a BR, but not those in which the crystal is simply dispersed in the BR. Examples of such SPB-comprising BR include VCR-303, VCR-412, VCR-617 manufactured by Ube Industries, Ltd, and the like. By using the SPB-comprising BR, crosslink density can be reduced even when the same complex elastic modulus E* is obtained, so that breaking strength, durability, abrasion resistance, crack growth property, etc. can be improved, allowing for prevention of damage at the time of rim assembly.

A melting point of the SPB is preferably 180°C or higher, more preferably 190°C or higher. When the melting point of the SPB is 180°C or higher, it becomes possible to prevent the crystal from melting in a tire granule during press, and there is a tendency that decrease in rigidity can be suppressed. Furthermore, the melting point of the SPB is preferably 220°C or lower, more preferably 210°C or lower. When the melting point of the SPB is 220°C or lower, there is a tendency to be able to prevent dispersibility of the SPB-comprising BR in the rubber composition from deteriorating due to its molecular weight becoming too large.

In the SPB-comprising BR, a content of the SPB is preferably 2.5% by mass or more, more preferably 10% by mass or more. When the content of the SPB is 2.5% by mass or more, a sufficient rigidity of the rubber composition tends to be obtained. Furthermore, in the SPB-comprising BR, the content of the SPB is preferably 20% by mass or less, more preferably 18% by mass or less. When the content of the SPB is 20% by mass or less, there is a tendency that good dispersion and processability in the rubber composition can be obtained. Here, the content of the SPB in the SPB-comprising BR indicates a content of a boiling n-hexane-insoluble matter.

Examples of the modified BR include those obtained by adding a tin compound after polymerizing 1,3-butadiene with a lithium initiator, the end of the modified BR molecule being further bonded by tin-carbon bond (a tin-modified BR), a butadiene rubber having a condensed alkoxysilane compound at its active end (a silica-modified BR), and the like. Examples of such modified BR include, for example, BR1250H (a tin-modified BR) manufactured by Zeon Corporation, a S-modified polymer (a silica-modified BR) manufactured by Sumitomo Chemical Co., Ltd., and the like. By using the tin-modified BR, a Tg (glass transition temperature) of a polymer can be lowered, and a bond between a filler such as carbon black and the polymer can be strengthened.

Examples of the lithium initiator include lithium-based compounds such as alkyllithium, aryllithium, allyllithium, vinyllithium, an organic tin lithium, and an organic nitrogen lithium compound. By using a lithium-based compound as an initiator, a tin-modified BR having a high vinyl content and a low cis content can be produced.

Examples of the tin compound include tin tetrachloride, butyltin trichloride, dibutyltin dichloride, dioctyltin dichloride, tributyltin chloride, triphenyltin chloride, diphenyldibutyltin, diphenyltin dioctanoate, divinyldimethyltin, tetrabenzyltin, dibutyltin distearate, tetraallyltin, p-tributyltin styrene, and the like, which may be used alone, or two or more thereof may be used in combination.

A content of a tin atom of the tin-modified BR is preferably 50 ppm or more, more preferably 60 ppm or more. When the content of the tin atom is 50 ppm or more, an effect of promoting dispersion of carbon black in the tin-modified BR is easily exhibited, and there is a tendency that increase in tan $\delta$ can be suppressed. Furthermore, the content of the tin atom is preferably 3,000 ppm or less, more preferably 2,500 ppm or less, further preferably 250 ppm or less. When the content of the tin atom is 3,000 ppm or less, a kneaded product is well organized, and a good extrusion processability of the kneaded product tends to be obtained.

As the rare-earth-based BR, those synthesized using a rare-earth element-based catalyst and having preferably 1.8% or less, more preferably 1.0% or less, further preferably 0.8% or less of a vinyl bond amount (1,2 bond butadiene unit amount) and preferably 90% or more, more preferably 95% or more, more preferably 96% or more, further preferably 97% or more of a cis content (cis 1,4 bond content) can be appropriately used. When the vinyl bond amount and the cis content are within the above-described ranges, effects of the present disclosure can be better exhibited. Besides, the vinyl bond amount and the cis content of the rare-earth-based BR are values measured by infrared absorption spectrometry.

As the rare-earth element-based catalyst used in synthesis of the rare-earth-based BR, known catalysts can be used, and examples of the catalyst include those including lanthanum series rare-earth element compounds, an organic aluminum compound, aluminoxane, a halogen-containing compound, and a Lewis base as necessary. Among them, lanthanum series rare-earth element compounds are preferable from the viewpoint that a BR having a high cis content and a low vinyl bond amount can be obtained, and among them, neodymium (Nd)-based catalysts using a Nd-containing compound are preferable.

A content of the BR in the rubber component is 40% by mass or more, more preferably 50% by mass or more, further preferably 60% by mass or more, further preferably 65% by mass or more. When the content of the BR in the rubber component is 40% by mass or more, a sufficient flexing crack growth resistance tend to be obtained. Furthermore, the content of the BR in the rubber component is preferably 80% by mass or less, more preferably 70% by mass or less. When the content of the BR in the rubber component is 80% by mass or less, crack resistance tends to be less likely to deteriorate.

Further, the BR comprises a SPB-comprising BR, and a content of the SPB-comprising BR in the rubber component is, not particularly limited but, preferably 10% by mass or more, more preferably 20% by mass or more, further preferably 25% by mass or more, most preferably 30% by mass or more. When the content of the SPB-comprising BR in the rubber component is 10% by mass or more, a sufficient breaking property is obtained, and there is a tendency that damage at the time of rim assembly can be prevented. Furthermore, the content of the SPB-comprising BR in the rubber component is preferably 50% by mass or less, more preferably 40% by mass or less, further preferably 35% by mass or less. When the content of the SPB-comprising BR in the rubber component is 50% by mass or less, there is a tendency that deterioration of processability of an unvulcanized rubber can be prevented. Here, the content of the SPB-comprising BR in the rubber component is preferably 30% by mass or less, more preferably 25% by mass or less, from the viewpoint that effects of the present disclosure can be better exhibited.

Further, in an embodiment, it is preferable that the BR comprises a tin-modified BR, and a content of the tin-modified BR in the rubber component is, not particularly limited but, preferably 20% by mass or more, more preferably 30% by mass or more, further preferably 35% by mass or more. When the content of the tin-modified BR is 20% by mass or more, there is a tendency that tan $\delta$ (70°C) and tan $\delta$ (100°C) can be lowered. Furthermore, the content of the tin-modified BR is preferably 50% by mass or less, more preferably 45% by mass or less, more preferably 40% by mass or less, further preferably 35% by mass or less. When the content of the tin-modified BR is 50% by mass or less, a good processability tends to be obtained. Here, the content of the tin-modified BR in the rubber component is preferably 40% by mass or more or 65% by mass or less from the viewpoint that effects of the present disclosure can be better exhibited.

Further, in an embodiment, it is preferable that the BR comprises a rare-earth-based BR, and a content of the rare-earth-based BR in the rubber component is, not particularly limited but, preferably 10% by mass or more, more preferably 20% by mass or more, further preferably 25% by mass or more, further preferably 35% by mass or more. Furthermore, the content of the rare-earth-based BR in the rubber component is preferably 75% by mass or less, more preferably 70% by mass or less, more preferably 65% by mass or less, more preferably 60% by mass or less, further preferably 50% by mass or less. When the content of the rare-earth-based BR in the rubber component is within the above-described ranges, effects of the present disclosure can be better exhibited.

When the rubber component is composed of a natural rubber and a butadiene rubber, a content of the natural rubber and the butadiene rubber in the rubber component is preferably 20 to 60% by mass for the natural rubber and 40 to 80% by mass for the butadiene rubber, more preferably 20 to 35% by mass for the natural rubber and 65 to 80% by mass for the butadiene rubber, further preferably 30 to 35% by mass for the natural rubber and 65 to 70% by mass for the butadiene rubber.

(Carbon black)

Carbon black is not particularly limited, and those common in the tire industry can be used, such as GPF, FEF, HAF, ISAF, and SAF. They may be used alone, or two or more thereof may be used in combination.

A nitrogen adsorption specific surface area ($N_2SA$) of carbon black is preferably 40 $m^2$/g or more, more preferably 50 $m^2$/g or more, more preferably 60 $m^2$/g or more, further preferably 70 $m^2$/g or more, from the viewpoints of weather resistance and reinforcing property. Furthermore, the $N_2SA$ of carbon black is preferably 250 $m^2$/g or less, more preferably 220 $m^2$/g or less, from the viewpoints of fuel efficiency, dispersibility, breaking property and durability. Besides, the $N_2SA$ of carbon black is a value measured according to JIS K 6217-2 "Carbon black for rubber industry-Fundamental characteristics-Part 2: Determination of specific surface area-Nitrogen adsorption methods-Single-point procedures" Method A.

A dibutyl phthalate (DBP) oil absorption of carbon black is preferably 110 ml/100 g or more, more preferably 115 ml/100 g or more, further preferably 120 ml/100 g or more. When the dibutyl phthalate (DBP) oil absorption of carbon black is 110 ml/100 g or more, a good steering stability tends to be obtained. Furthermore, the DBP oil absorption of carbon black is preferably 170 ml/100 g or less, more preferably 160 ml/100 g or less, more preferably 128 ml/100 g or less. When the DBP oil absorption of carbon black is 170 ml/100 g or less, a good low heat generation tends to be obtained. Besides, the DBP oil absorption of carbon black is measured in accordance with JIS K 6217-4: 2001.

A content of carbon black based on 100 parts by mass of the rubber component is 45 parts by mass or more. When the content of carbon black is 40 parts by mass or more, there is a tendency that abrasion resistance to a rim can be sufficiently secured. Furthermore, the content of carbon black based on to 100 parts by mass of the rubber component is preferably 55 parts by mass or less, more preferably 53 parts by mass or less, further preferably 50 parts by mass or less. When the content of carbon black is 55 parts by mass or less, a sufficient low heat generation tends to be obtained.

In addition, a content of carbon black in a composition when manufacturing the rubber composition is preferably 26.0% by mass or more, more preferably 26.1% by mass or more, more preferably 28.0% by mass or more, further preferably 29.0% by mass or more. When the content of carbon black in the compound is 26.0% by mass or more, a sufficient electrical conductivity is obtained, and there is a tendency to suppress deterioration of electrical resistance of a tire. Furthermore, the content of carbon black in the composition is preferably 32.0% by mass or less, more preferably 31.7% by mass or less, more preferably 31.5% by mass or less, more preferably 31.4% by mass or less, more preferably 31.0% by mass or less, further preferably 29.7% by mass or less. When the content of carbon black in the compound is 32.0% by mass or less, a good heat generation tends to be obtained.

In addition to the above-described components, the rubber composition for a clinch apex used in the tire of the present disclosure can appropriately comprise compounding agents conventionally and commonly used in the rubber industry, for example, reinforcing fillers other than carbon black, silane coupling agents, oil, a tackifying resin, wax, processing aid, various antioxidants, a softening agent, zinc oxide, stearic acid, a vulcanizing agent such as sulfur, various vulcanization accelerators, and the like,.

(Reinforcing fillers other than carbon black)

As the reinforcing filler other than carbon black, those conventionally used in the rubber composition for a clinch apex can be compounded, such as silica, aluminum hydroxide, calcium carbonate, alumina, clay, and talc.

Silica

In an embodiment, silica is used. By compounding silica, fuel efficiency, abrasion resistance, and wet grip performance can be improved. Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Silica may be used alone, or two or more thereof may be used in combination.

A nitrogen adsorption specific surface area ($N_2SA$) of silica is preferably 20 $m^2$/g or more, more preferably 30 $m^2$/g or more, further preferably 100 $m^2$/g or more. Furthermore, the $N_2SA$ is preferably 400 $m^2$/g or less, more preferably

300 m$^2$/g or less, further preferably 280 m$^2$/g or less. When the N$_2$SA is within the above-described ranges, fuel efficiency and processability tend to be obtained with good balance. Besides, the N$_2$SA of silica herein is a value measured by the BET method according to ASTM D3037-81.

A content of silica is preferably 20 parts by mass or more, more preferably 30 parts by mass or more, based on 100 parts by mass of the rubber component. When the content of silica is 20 parts by mass or more, a sufficient effect of improving abrasion resistance tends to be obtained. The content of silica is preferably 50 parts by mass or less, more preferably 40 parts by mass or less, based on 100 parts by mass of the rubber component. When the content of silica exceeds 50 parts by mass, fuel efficiency and abrasion resistance tend to be lowered due to deterioration of dispersibility of silica to a rubber.

(Silane coupling agent)

When silica is compounded, it is preferably used in combination with a silane coupling agent. Examples of the silane coupling agent include any silane coupling agents conventionally used in combination with silica in the rubber industry, for example, sulfide-based silane coupling agents such as bis(3-triethoxysilylpropyl)disulfide and bis(3-triethoxycyrilpropyl)tetrasulfide, mercapto-based silane coupling agents such as 3-mercaptopropyltrimethoxysilane, and NXT-Z100, NXT-Z45, and NXT manufactured by Momentive Performance Materials (silane coupling agents having a mercapto group), vinyl-based silane coupling agents such as vinyltriethoxysilane, amino-based silane coupling agents such as 3-aminopropyltriethoxysilane, glycidoxy-based silane coupling agents such as γ-glycidoxypropyltriethoxysilane, nitro-based silane coupling agents such as 3-nitropropyltrimethoxysilane, chloro-based silane coupling agents such as 3-chloropropyltrimethoxysilane, and the like. They may be used alone, or two or more thereof may be used in combination.

A content of the silane coupling agent when compounded based on 100 parts by mass of silica is preferably 3 parts by mass or more, more preferably 6 parts by mass or more. When the content of the silane coupling agent is less than 3 parts by mass, a sufficient effect of improving dispersibility of silica tends not to be obtained. Furthermore, the content of the silane coupling agent is preferably 15 parts by mass or less, more preferably 12 parts by mass or less. When the content of the silane coupling agent exceeds 15 parts by mass, an effect commensurate with the cost tends not to be obtained.

(Oil)

Examples of oil include, for example, mineral oils such as an aromatic oil, a process oil, and a paraffin oil, and the like. Among them, a process oil is preferably used from the reason for reducing environmental burden, and a process oil having a low content of a polycyclic aromatic compound (PCA) (a low PCA content process oil) is more preferably used.

Examples of the low PCA content process oil include Treated Distillate Aromatic Extract (TDAE), in which an aromatic process oil is re-extracted, an aroma substitute oil, which is a mixture of asphalt and a naphthenic oil, mild extraction solvates (MES), a heavy naphthenic oil, and the like. Among them, TDAE is more preferable.

A content of oil when compounded based on 100 parts by mass of the rubber component is preferably 2 parts by mass or more, more preferably 3 parts by mass or more, more preferably 5 parts by mass or more, further preferably 10 parts by mass or more, from the viewpoints of improvement in elongation at break, processability, and the like. Furthermore, the content of oil when compounded based on 100 parts by mass of the rubber component is preferably 30 parts by mass or less, more preferably 25 parts by mass, more preferably 20 parts by mass or less, further preferably 15 parts by mass or less, from the viewpoint that adhesiveness becomes too low, possibly decreasing processability and productivity. In an embodiment, the content is preferably 7 parts by mass or less.

(Tackifying resin)

Examples of the tackifying resin include a cyclopentadiene-based resin, a coumarone resin, a petroleum-based resin (a C5-based petroleum resin, an aromatic petroleum resin, an alicyclic petroleum resin, etc.), a phenol-based resin, a rosin derivative, and the like. The C5-based petroleum resin is a resin obtained by polymerizing a C5 (5 carbon atoms)-based petroleum hydrocarbon, in other words, a resin having a structural unit based on the C5-based petroleum hydrocarbon. The C5-based petroleum hydrocarbon refers to a C5 fraction (a fraction having 5 carbon atoms) obtained by thermal decomposition of naphtha, specifically to diolefins such as isoprene, 1,3-pentadiene, dicyclopentadiene, and piperylene, and olefins such as 2-methyl-1-butene, 2-methyl-2-butene, and cyclopentene.

(Antioxidant)

The antioxidant is not particularly limited and can be compounded with, for example, each of amine-based, quinoline-based, phenol-based, and imidazole-based compounds, and antioxidants such as a carbamic acid metal salt to be appropriately selected, and these antioxidants may be used alone, or two or more thereof may be used in combination.

Among them, amine-based antioxidants and quinolin-based antioxidants are preferable, and p-phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine are more preferable. Among them, N-(1,3-dimethylbutyl)-N'-phenyl-p-phenylenediamine and 2,2,4-trimethyl-1,2-dihydroquinolin polymer are particularly preferably used in combination.

A content of the antioxidant when compounded based on 100 parts by mass of the rubber component is, not particularly limited but, preferably 0.5 parts by mass or more, more preferably 0.8 parts by mass or more. Furthermore, the content of the antioxidant when compounded based on 100 parts by mass of the rubber component is preferably 5.0 parts by mass or less, more preferably 4.0 parts by mass or less, further preferably 3.0 parts by mass or less. When the content of the antioxidant is within the above-described ranges, a filler is easy to be well dispersed, and a rubber composition to be obtained is easily kneaded.

In addition, for wax, processing aid, zinc oxide, and stearic acid, those conventionally used in the rubber industry can be used.

(Vulcanizing agent)

The vulcanizing agent is not particularly limited, and those common in the rubber industry can be used, but those comprising a sulfur atom are preferable, such as, for example, a powdered sulfur, a precipitated sulfur, a colloidal sulfur, a surface-treated sulfur, and an insoluble sulfur.

A content of the vulcanizing agent based on 100 parts by mass of the rubber component is preferably 0.5 parts by mass or more, more preferably 1.0 part by mass or more, further preferably 1.5 parts by mass or more. Furthermore, the content of the vulcanizing agent based on 100 parts by mass of the rubber component is 5.0 parts by mass or less, preferably 4.0 parts by mass or less, more preferably 3.0 parts by mass or less.

(Vulcanization accelerator)

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, xanthate-based vulcanization accelerators. Among them, sulfenamide-based vulcanization accelerators are preferable from the viewpoint that desired effects can be obtained more appropriately.

Examples of the sulfenamide-based vulcanization accelerator include CBS (N-cyclohexyl-2-benzothiazolyl sulfenamide), TBBS (N-t-butyl-2-benzothiazolyl sulfenamide), N-oxyethylene-2-benzothiazyl sulfenamide, N,N'-diisopropyl-2-benzothiazyl sulfenamide, N,N-dicyclohexyl-2-benzothiazyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, CBS is particularly preferable from the viewpoint that desired effects can be obtained more appropriately.

A content of the vulcanization accelerator when compounded based on 100 parts by mass of the rubber component is preferably 1 part by mass or more, more preferably 2 parts by mass or more, further preferably 3 parts by mass or more. Furthermore, the content of the vulcanization accelerator based on 100 parts by mass of the rubber component is preferably 6 parts by mass or less, more preferably 5 parts by mass or less, further preferably 4 parts by mass or less. When the content of the vulcanization accelerator is within the above-described ranges, there is a tendency that breaking strength and elongation can be secured.

(Method of manufacturing rubber composition for clinch apex)

The method of manufacturing the rubber composition for a clinch apex is not particularly limited, and a known method can be used. For example, the rubber composition for a clinch apex can be manufactured by, for example, a method of kneading components other than vulcanizing agents and vulcanization accelerators of the above-described components using a rubber kneading apparatus such as an open roll, a Banbury mixer, a kneader, and a closed type kneader (a base kneading step), and then adding vulcanizing agents and vulcanization accelerators to the kneaded product and further kneading the mixture (a final kneading step) to obtain an unvulcanized rubber composition for a clinch apex, followed by vulcanizing the unvulcanized rubber composition.

Kneading conditions are not particularly limited, but in the case of the rubber composition for a clinch apex, the base kneading step preferably includes kneading at a discharge temperature of 160°C to 180°C for 3 to 7 minutes, and the final kneading step preferably includes kneading for 2 to 6 minutes until 90°C to 120°C. Vulcanization conditions are not particularly limited, but usually, an unvulcanized tire is molded into a clinch apex in an unvulcanized state, and manufactured and vulcanized together with other members, and thus, it is preferable to set vulcanization conditions for a tire and vulcanize it at 160°C to 180°C for 8 to 16 minutes.

<Tire>

As described above, the tire of the present disclosure comprises a clinch apex composed of a rubber composition for a clinch apex, the rubber composition having 6.0 to 12. MPa of a complex elastic modulus E* at 70°C and 1% strain (E* (70°C)), 0.10 or less of a loss tangent tan δ at 70°C and 1% strain (tan δ (70°C)), and 0.06 or less of tan δ at 100°C and 0.5% strain (tan δ (100°C)), and satisfying Equation (1): tan δ (70°C)/E* (70°C)×1000 ≦ 10.0, and thus is preferably a pneumatic tire. The pneumatic tires can be used as a general tire such as a tire for a passenger car, a high performance tire for a passenger car, a heavy duty tire for a truck, bus, or the like, a tire for a two-wheeled vehicle, and a racing tire. Besides, the high performance tire herein is a tire particularly excellent in grip performance and a concept of the high performance tire includes a racing tire used for a racing vehicle.

<Method of manufacturing tire>

The tire of the present disclosure can be manufactured by a usual method using the above-mentioned rubber composition for a clinch apex. That is, in the case of a vulcanized rubber composition, the tire can be manufactured by extruding an unvulcanized rubber composition, confirmed to have 6.0 to 12.0 MPa of a complex elastic modulus E* at 70°C and 1% strain (E* (70°C)), 0.10 or less of a loss tangent tan δ at 70°C and 1% strain (tan δ (70°C)), and 0.06 or less of tan δ at 100°C and 0.5% strain (tan δ (100°C)), and satisfy Equation (1): tan δ (70°C)/E* (70°C)×1000 ≦ 10.0, into a shape of a clinch apex, attaching the extruded product together with other tire members, and molding the attached mixture on a tire molding machine by a usual method to form an unvulcanized tire, followed by heating and pressurizing this unvulcanized tire in a vulcanizer.

Examples of preferred embodiments of the present disclosure include:

[1] A tire comprising a clinch apex composed of a rubber composition for a clinch apex, the rubber composition having 6.0 to 12.0 MPa of a complex elastic modulus E* at 70°C and 1% strain (E* (70°C)), 0.10 or less, preferably 0.03 to 0.08, more preferably 0.03 to 0.07, further preferably 0.03 to 0.05 of a loss tangent tan δ at 70°C and 1% strain (tan δ (70°C)), and 0.06 or less, preferably 0.02 to 0.06, more preferably 0.02 to 0.05, further preferably 0.02 to 0.03 of tan δ at 100°C and 0.5% strain (tan δ (100°C)), and satisfying the following equation (1):

$$\text{Equation (1): } \tan \delta\ (70°C)/E^*\ (70°C) \times 1000 \leqq 10.0$$

(preferably 2.0 ≦ tan δ (70°C)/E* (70°C)×1000 ≦ 10.0, more preferably 2.0 ≦ tan δ (70°C)/E* (70°C)×1000 ≦ 4.2), wherein the rubber composition for a clinch apex comprises 45 parts by mass or more of carbon black, 40% by mass or more, preferably 40 to 80% by mass, more preferably 40 to 70% by mass, further preferably 65 to 70% by mass of a butadiene rubber, and the butadiene rubber comprises a butadiene rubber comprising 1,2-syndiotactic polybutadiene crystal (SPB),
[2] The tire of [1] above, wherein the rubber composition for a clinch apex comprises 45 to 55 parts by mass, preferably 45 to 55 parts by mass, more preferably 43 to 50 parts by mass of carbon black having a DBP oil absorption of 110 ml/100 g or more, preferably 115 to 128 ml/100 g based on 100 parts by mass of a diene-based rubber component, and a content percentage of carbon black in the rubber composition is 26.0 to 32.0% by mass, preferably 26.1 to 31.7% by mass, more preferably 26.1 to 31.4% by mass, further preferably 26.1 to 29.7% by mass,
[3] The tire of [1] or [2] above, wherein the diene-based rubber component comprises 40% by mass or more, preferably 40 to 80% by mass, more preferably 40 to 70% by mass, further preferably 65 to 70% by mass of a butadiene rubber, and the butadiene rubber comprises a tin-modified butadiene rubber,
[4] The tire of [1] or [2] above, wherein the butadiene rubber comprises a rare-earth-based butadiene rubber synthesized by using a rare-earth element-based catalyst,
[5] The tire of [1] or [2] above, wherein the butadiene rubber comprises a tin-modified butadiene rubber and a butadiene rubber comprising 1,2-syndiotactic polybutadiene crystal (SPB),
[6] The tire of [1] or [2] above, wherein the butadiene rubber comprises a tin-modified butadiene rubber and a rare-earth-based butadiene rubber synthesized by using a rare-earth element-based catalyst,

[7] The tire of [1] or [2] above, wherein a content of the butadiene rubber comprising 1,2-syndiotactic polybutadiene crystal (SPB) in the diene-based rubber component is 10 to 50% by mass, preferably 20 to 35% by mass, more preferably 20 to 30, further preferably 20 to 25% by mass,

[8] The tire of [3] above, wherein a content of the tin-modified butadiene rubber in the diene-based rubber component is 20 to 65% by mass, preferably 30 to 65% by mass, more preferably 35 to 65% by mass, further preferably 40 to 65% by mass,

[9] The tire of [4] above, wherein a content of the rare-earth-based butadiene rubber synthesized by using the rare-earth element-based catalyst in the diene-based rubber component is 10 to 75% by mass, preferably 20 to 70% by mass, more preferably 25 to 65% by mass, further preferably 35 to 65% by mass,

[10] The tire of [5] above, wherein a content of the tin-modified butadiene rubber in the diene-based rubber component is 20 to 45% by mass, preferably 30 to 45% by mass, more preferably 35 to 45% by mass, further preferably 40 to 45% by mass, and wherein a content of the butadiene rubber comprising 1,2-syndiotactic polybutadiene crystal (SPB) in the diene-based rubber component is 20 to 35% by mass, preferably 20 to 30% by mass, more preferably 20 to 25% by mass,

[11] The tire of [6] above, wherein a content of the tin-modified butadiene rubber in the diene-based rubber component is 20 to 60% by mass, preferably 30 to 45% by mass, and wherein a content of the rare-earth-based butadiene rubber synthesized by using the rare-earth element-based catalyst in the diene-based rubber component is 20 to 60% by mass, preferably 35 to 50% by mass,

[12] The tire of any of [1] to [11] above, wherein the rubber composition for a clinch apex comprises 2 to 30 parts by mass, preferably 2 to 15 parts by mass, more preferably 2 to 7 parts by mass of oil, based on 100 parts by mass of the diene-based rubber component.

EXAMPLES

Hereinafter, the present disclosure will be described based on Examples, but is not limited to these examples.

Various chemicals used in Examples and Comparative examples are shown below.

NR: TSR20

BR1: BR150B manufactured by Ube Industries, Ltd. (vinyl bond amount: 1.5%, cis 1,4 bond content: 97%)

BR2: BR1250H manufactured by Zeon Corporation (tin-modified BR, polymerized using lithium as an initiator, vinyl bond amount: 10 to 13%, cis 1,4 bond content: 40%, Mw/Mn: 1.5, tin atom content: 250 ppm)

BR3: VCR617 manufactured by Ube Industries, Ltd. (syndiotactic-1,2-polybutadiene crystal dispersion, 1,2-syndiotactic polybutadiene crystal melting point: 200°C, boiling n-hexane insoluble matter content: 15-18% by mass, 1,2-syndiotactic polybutadiene crystal content: 17% by mass, cis 1,4 bond content: 92%)

BR4: BR730 manufactured by JSR Corporation (BR synthesized using a Nd-based catalyst, cis 1,4 bond content: 95%, vinyl bond amount: 0.8%)

BR5: CB25 manufactured by LANXESS (BR synthesized using a Nd-based catalyst, cis 1,4 bond content: 97%, vinyl bond amount: 0.7%)

Carbon Black 1: DIABLACK (registered trademark) SH manufactured by Mitsubishi Chemical Corporation (ASTM No. N347, $N_2SA$: 78m$^2$/g, DBP: 128 ml/100 g)

Carbon Black 2: DIABLACK (registered trademark) E manufactured by Mitsubishi Chemical Corporation (FEF, N550, $N_2SA$: 41 m$^2$/g, DBP: 115 ml/100 g)

Carbon Black 3: DIABLACK (registered trademark) G manufactured by Mitsubishi Chemical Corporation (N660, $N_2SA$: 28 m$^2$/g, DBP: 84 ml/100 g)

Oil: VivaTec 400 manufactured by H & R Group (TDAE oil, Tg: -58°C)

Wax: OZOACE 0355 manufactured by Nippon Seiro Co., Ltd. (paraffin-based)

Antioxidant 1: Antigen 6C manufactured by Sumitomo Chemical Co., Ltd. (N-(1,3-dimethylbutyl)-N'-phenyl-p-phenylenediamine)

Antioxidant 2: Antigen RD manufactured by Sumitomo Chemical Co., Ltd. (2,2,4-trimethyl-1,2-dihydroquinoline polymer)

Zinc oxide: Zinc flower No. 1 manufactured by Mitsui Mining & Smelting Co., Ltd.

Stearic acid: Beads stearic acid "Camellia" manufactured by NOF CORPORATION

Sulfur: Seimi OT manufactured by Nippon Kanryu Industry Co., Ltd. (10% oil-containing insoluble sulfur)

Vulcanization accelerator 1: Nocceler CZ manufactured by Ouchi Shinko Chemical Industrial Co., Ltd. (N-cyclohexyl-2-benzothiazolyl sulfeneamide (CBS))

Vulcanization accelerator 2: Nocceler NS manufactured by Ouchi Shinko Chemical Industrial Co., Ltd. (N-t-butyl-2-benzothiazolyl sulfenamide (TBBS))

Examples 1 to 20 and Comparative examples 1 to 8

According to the formulation shown in Tables 1 to 3, chemicals other than sulfur and vulcanization accelerators were kneaded for 5 minutes using a 1.7L sealed Banbury mixer until the temperature having reached the discharged temperature of 170°C to obtain a kneaded product. Next, sulfur and vulcanization accelerators were added to the obtained kneaded product, and the mixture were kneaded for 4 minutes using a biaxial open roll until the temperature having reached 105°C to obtain an unvulcanized rubber composition. The obtained unvulcanized rubber composition was press-vulcanized at 170°C for 12 minutes to prepare a test rubber composition, and a loss tangent tan δ and a complex elastic modulus E* were measured by the following methods. The results are shown in Tables 1 to 3. Examples 1,3,6-10, and 12-14 are according to the invention.

<Measurement of loss tangent tan δ and complex elastic modulus E*>

Using a spectrometer manufactured by Ueshima Seisakusho Co., Ltd., tan δ and E* were measured under conditions of a dynamic strain amplitude of 1%, a frequency of 10 Hz, and a temperature of 70°C for each test vulcanized rubber sheet. Furthermore, tan δ was measured at a temperature of 100°C, a dynamic strain amplitude of 0.5%, and a frequency of 10 Hz.
Moreover, the above-described unvulcanized rubber composition was extruded into a shape of a tire clinch apex using an extruder with a mouthpiece having a predetermined shape, and the extruded product was attached together with other tire members to form an unvulcanized tire, and the unvulcanized tire was press-vulcanized for 12 minutes under a condition of 170°C to manufacture a tire (size: 205/65R15, studless tire).
The tires obtained in each Example and Comparative example were evaluated as follows. The results are shown in Tables 1 to 3.

<Steering stability, riding comfort>

The tires (205/65R15) were mounted on all wheels of a vehicle (3,000 cc), and the actual vehicle was run on a test course under general driving conditions. Control stability (steering stability) and riding comfort during steering were sensory-evaluated by a test driver and represented as an index as Comparative example 1 being 100. The results indicate that the higher the steering stability index is, the more excellent the steering stability is, and the higher the riding comfort index is, the more excellent the riding comfort is. The steering stability index has a target value of 105 or more, and the riding comfort index has a target value of 102 or more.

<Rolling resistance (fuel efficiency index)>

Using a rolling resistance tester, a rolling resistance when the tires were run under a rim (15×6JJ), an internal pressure (230 kPa), a load (3.43 kN), and a speed (80 km/h) was measured, and the inverse value was represented as an index as Comparative example 1 being 100. The higher the value is, the lower the rolling resistance is and the more excellent the fuel efficiency is. The fuel efficiency index has a target value of 107 or more, more preferably 110 or more.

<H/S performance>

The tire was incorporated into a regular rims 15×6JJ and was filled with air to set an internal pressure to 230 kPa. This tire was mounted on a drum type running tester with a negative camber angle given. This camber angle was -3°. A vertical load of 3.74 kN was applied to this tire. This tire was run on a drum having a radius of 1.7 m at a speed of 270 km/h. A running time until the tire was broken was measured. All tire destruction was due to damage to a bead portion. The numerical value of this running time was represented as an index as the result of Comparative example 1 being 100. The results indicate that the higher this value is, the more excellent the H/S performance is. The H/S performance has a target value of 107 or more, more preferably 110 or more. Besides, this H/S performance means a high-speed performance.

Table 1

| | Example | | | | | | | | | | | |
|---|---|---|---|---|---|---|---|---|---|---|---|---|
| | 1 | 2* | 3 | 4* | 5 | 6 | 7 | 8 | 9 | 10 | 11* | 12 |
| Compounding amount (part by mass) | | | | | | | | | | | | |
| NR | 35 | 35 | 35 | 35 | 35 | 35 | 35 | 35 | 35 | 35 | 35 | 35 |
| BR1 | - | - | - | - | - | - | - | - | - | - | - | - |

(continued)

Table 1

| | Example | | | | | | | | | | | |
|---|---|---|---|---|---|---|---|---|---|---|---|---|
| | 1 | 2* | 3 | 4* | 5 | 6 | 7 | 8 | 9 | 10 | 11* | 12 |
| Compounding amount (part by mass) | | | | | | | | | | | | |
| BR2 | 35 | 35 | 35 | 35 | 35 | 35 | 45 | 30 | 40 | 40 | 40 | 40 |
| BR3 | 30 | 30 | 30 | 30 | 30 | 30 | 20 | 35 | 25 | 25 | 25 | 25 |
| Carbon black 1 | 55 | 55 | 50 | 50 | 43 | 45 | 45 | 47 | 47 | 50 | 55 | 47 |
| Carbon black 2 | - | - | - | - | - | - | - | - | - | - | - | - |
| Carbon black 3 | - | - | - | - | - | - | - | - | - | - | - | - |
| Oil | 15 | 5 | 10 | 5 | 7 | 10 | 5 | 10 | 5 | 2 | 2 | 2 |
| Wax | 1.5 | 1.5 | 1.5 | 1.5 | 1.5 | 1.5 | 1.5 | 1.5 | 1.5 | 1.5 | 1.5 | 1.5 |
| Antioxidant 1 | 1.5 | 1.5 | 1.5 | 1.5 | 1.5 | 1.5 | 1.5 | 1.5 | 1.5 | 1.5 | 1.5 | 1.5 |
| Antioxidant 2 | 1.5 | 1.5 | 1.5 | 1.5 | 1.5 | 1.5 | 1.5 | 1.5 | 1.5 | 1.5 | 1.5 | 1.5 |
| Stearic acid | 3 | 3 | 3 | 3 | 3 | 3 | 3 | 3 | 3 | 3 | 3 | 3 |
| Zinc oxide | 2 | 2 | 2 | 2 | 2 | 2 | 2 | 2 | 2 | 2 | 2 | 2 |
| Sulfur | 2.5 | 2.5 | 2.5 | 2.5 | 2.5 | 2.5 | 2.5 | 2.5 | 2.5 | 2.5 | 2.5 | 2.5 |
| Vulcanization accelerator 1 | 3 | 3 | 3 | 3 | 3 | 3 | 3 | 3 | 3.5 | 4 | 4 | 5 |
| Vulcanization accelerator 2 | - | - | - | - | - | - | - | - | - | - | - | - |
| Carbon black ratio (% by mass) | 29.7 | 31.4 | 28.6 | 29.4 | 26.1 | 26.4 | 27.3 | 27.3 | 28.1 | 29.7 | 31.7 | 28.3 |
| E* (70°C) | 10.0 | 13.0 | 10.0 | 13.0 | 8.0 | 6.0 | 6.0 | 8.0 | 8.0 | 10.0 | 12.0 | 12.0 |
| tan δ (70°C) | 0.10 | 0.10 | 0.07 | 0.07 | 0.05 | 0.06 | 0.04 | 0.08 | 0.04 | 0.04 | 0.10 | 0.05 |
| tan δ (70°C)/E* (70°C)×1000 | 10.0 | 7.7 | 7.0 | 5.4 | 6.3 | 10.0 | 3.3 | 10.0 | 2.5 | 2.0 | 8.3 | 4.2 |
| tan δ (100°C) | 0.05 | 0.07 | 0.04 | 0.05 | 0.03 | 0.03 | 0.02 | 0.04 | 0.05 | 0.03 | 0.07 | 0.03 |
| Evaluation | | | | | | | | | | | | |
| Steering stability | 105 | 110 | 112 | 115 | 110 | 108 | 122 | 112 | 128 | 132 | 108 | 130 |
| | Example | | | | | | | | | | | |
| | 1 | 2* | 3 | 4* | 5 | 6 | 7 | 8 | 9 | 10 | 11* | 12 |
| Riding comfort | 105 | 102 | 105 | 100 | 110 | 115 | 116 | 110 | 108 | 105 | 118 | 108 |
| Rolling resistance | 110 | 115 | 118 | 123 | 118 | 118 | 122 | 110 | 120 | 128 | 107 | 122 |
| H/S performance | 122 | 112 | 135 | 123 | 137 | 130 | 137 | 110 | 110 | 130 | 107 | 127 |

*_Reference Example

Table 2

| | Example | | Comparative example | | | | | | | |
|---|---|---|---|---|---|---|---|---|---|---|
| | 13 | 14 | 1 | 2 | 3 | 4 | 5 | 6 | 7 | 8 |
| Compounding amount (part by mass) | | | | | | | | | | |
| NR | 35 | 35 | 35 | 35 | 35 | 35 | 35 | 35 | 35 | 40 |
| BR1 | - | - | 65 | 65 | 65 | 65 | 65 | 65 | 65 | - |
| BR2 | 35 | 35 | - | - | - | - | - | - | - | - |
| BR3 | 30 | 30 | - | - | - | - | - | - | - | 60 |
| Carbon black 1 | - | - | 70 | 50 | 35 | 65 | 35 | - | 60 | - |
| Carbon black 2 | 55 | 55 | - | - | - | - | - | - | - | 70 |
| Carbon black 3 | - | - | - | - | - | - | - | 55 | - | - |
| Oil | 15 | 5 | 15 | 15 | 15 | 25 | 25 | 15 | - | 6.5 |
| Wax | 1.5 | 1.5 | 1.5 | 1.5 | 1.5 | 1.5 | 1.5 | 1.5 | 1.5 | 2.0 |
| Antioxidant 1 | 1.5 | 1.5 | 1.5 | 1.5 | 1.5 | 1.5 | 1.5 | 1.5 | 1.5 | 2.0 |

(continued)

| | Example | | Comparative example | | | | | | | |
|---|---|---|---|---|---|---|---|---|---|---|
| | 13 | 14 | 1 | 2 | 3 | 4 | 5 | 6 | 7 | 8 |
| **Compounding amount (part by mass)** | | | | | | | | | | |
| Antioxidant 2 | 1.5 | 1.5 | 1.5 | 1.5 | 1.5 | 1.5 | 1.5 | 1.5 | 1.5 | - |
| Stearic acid | 3 | 3 | 3 | 3 | 3 | 3 | 3 | 3 | 3 | 2.5 |
| Zinc oxide | 2 | 2 | 2 | 2 | 2 | 2 | 2 | 2 | 2 | 3 |
| Sulfur | 2.5 | 2.5 | 2.5 | 2.5 | 2.5 | 2.5 | 2.5 | 2.5 | 3.3 | 2.0 |
| Vulcanization accelerator 1 | 3 | 3 | 3 | 3 | 3 | 3 | 3 | 3 | 3 | - |
| Vulcanization accelerator 2 | - | - | - | - | - | - | - | - | - | 2 |
| Carbon black ratio (% by mass) | 29.7 | 31.4 | 35.0 | 27.8 | 21.2 | 31.7 | 20.0 | 29.37 | 34.1 | 36.8 |
| E* (70°C) | 8.0 | 6.0 | 11.0 | 8.5 | 6.0 | 8.3 | 5.5 | 7.2 | 16.0 | 10.8 |
| tan $\delta$ (70°C) | 0.07 | 0.05 | 0.12 | 0.10 | 0.08 | 0.11 | 0.08 | 0.07 | 0.09 | 0.10 |
| tan $\delta$ (70°C)/E* (70°C)×1000 | 8.8 | 8.3 | 10.9 | 11.8 | 13.3 | 13.3 | 14.5 | 9.7 | 5.6 | 9.3 |
| tan $\delta$ (100°C) | 0.05 | 0.03 | 0.09 | 0.08 | 0.05 | 0.08 | 0.05 | 0.07 | 0.08 | 0.09 |
| **Evaluation** | | | | | | | | | | |
| Steering stability | 110 | 108 | 100 | 92 | 83 | 90 | 50 | 102 | 117 | 107 |
| Riding comfort | 113 | 113 | 100 | 102 | 113 | 103 | 109 | 110 | 50 | 105 |
| Rolling resistance | 120 | 128 | 100 | 85 | 70 | 70 | 60 | 111 | 120 | 108 |
| H/S performance | 127 | 132 | 100 | 80 | 125 | 75 | 128 | 113 | 82 | 75 |

Table 3

| | Reference Example | | | | | |
|---|---|---|---|---|---|---|
| | 15 | 16 | 17 | 18 | 19 | 20 |
| **Compounding amount (par by mass)** | | | | | | |
| NR | 60 | 35 | 35 | 35 | 60 | 35 |
| BR1 | - | - | - | - | - | |
| BR2 | 40 | 65 | - | - | - | 30 |
| BR3 | - | - | - | - | - | - |
| BR4 | - | - | 65 | - | 40 | 35 |
| BR5 | - | - | | 65 | - | |
| Carbon black 1 | 43 | 43 | 43 | 43 | 43 | 43 |
| Carbon black 2 | - | - | - | - | - | - |
| Carbon black 3 | - | - | - | - | - | |
| Oil | 7 | 7 | 7 | 7 | 7 | 7 |
| Wax | 1.5 | 1.5 | 1.5 | 1.5 | 1.5 | 1.5 |
| Antioxidant 1 | 1.5 | 1.5 | 1.5 | 1.5 | 1.5 | 1.5 |
| Antioxidant 2 | 1.5 | 1.5 | 1.5 | 1.5 | 1.5 | 1.5 |
| Stearic acid | 3 | 3 | 3 | 3 | 3 | 3 |
| Zinc oxide | 2 | 2 | 2 | 2 | 2 | 2 |
| Sulfur | 2.5 | 2.5 | 2.5 | 2.5 | 2.5 | 2.5 |
| Vulcanization accelerator 1 | 3 | 3 | 3 | 3 | 3 | 3 |
| Vulcanization accelerator 2 | - | - | - | - | - | |
| Carbon black ratio (% by mass) | 26.1 | 26.1 | 26.1 | 26.1 | 26.1 | 26.1 |
| E* (70°C) | 7.5 | 8.2 | 9.2 | 9.4 | 8.5 | 8.2 |
| tan $\delta$ (70°C) | 0.06 | 0.03 | 0.06 | 0.06 | 0.08 | 0.07 |
| tan $\delta$ (70°C)/E* (70°C)×1000 | 8.0 | 3.7 | 6.5 | 6.4 | 9.4 | 8.5 |

14

(continued)

| | Reference Example | | | | | |
|---|---|---|---|---|---|---|
| | 15 | 16 | 17 | 18 | 19 | 20 |
| Compounding amount (par by mass) | | | | | | |
| tan δ (100°C) | 0.04 | 0.02 | 0.04 | 0.04 | 0.06 | 0.05 |

| | Reference Example | | | | | |
|---|---|---|---|---|---|---|
| | 15 | 16 | 17 | 18 | 19 | 20 |
| Evaluation | | | | | | |
| Steering stability | 108 | 112 | 110 | 112 | 108 | 112 |
| Riding comfort | 115 | 108 | 110 | 111 | 115 | 111 |
| Rolling resistance | 124 | 134 | 127 | 126 | 112 | 115 |
| H/S performance | 130 | 140 | 128 | 127 | 118 | 123 |

From the results in Tables 1 to 3, it can be found that a tire to be obtained can improve in low heat generation and high-speed durability, while maintaining functions as a clinch apex such as steering stability and riding comfort, by comprising a clinch apex composed of a rubber composition for a clinch apex, the rubber composition having 6.0 to 12.0 MPa of a complex elastic modulus E* at 70°C and 1% strain (E* (70°C)), 0.10 or less of a loss tangent tan δ at 70°C and 1% strain (tan δ (70°C)), and 0.06 or less of tan δ at 100°C and 0.5% strain (tan δ (100°C)), and satisfying Equation (1): tan δ (70°C)/E* (70°C)×1000 ≦ 10.0, wherein the diene-based rubber component comprises 40% by mass or more of a butadiene rubber, and the butadiene rubber comprises a butadiene rubber comprising 1,2-syndiotactic polybutadiene crystal (SPB).

EXPLANATION OF NUMERALS

1. Sidewall
2. Clinch apex
3. Bead core
4. Bead
5. Inner liner
6. Belt
7. Tread

## Claims

1. A tire comprising a clinch apex composed of a rubber composition for a clinch apex, the rubber composition having a complex elastic modulus E* at 70°C, a frequency of 10 Hz and 1% strain (E* (70°C)) of 6.0 to 12.0 MPa, a loss tangent tan δ at 70°C, a frequency of 10 Hz and 1% strain (tan δ (70°C)) of 0.10 or less, and tan δ at 100°C, a frequency of 10 Hz and 0.5% strain (tan δ (100°C)) of 0.06 or less and satisfying the following equation (1):

$$\text{Equation (1): } \tan \delta \ (70°C)/E* \ (70°C) \times 1000 \leq 10.0,$$

the rubber composition for a clinch apex comprises 45 parts by mass or more of carbon black based on 100 parts by mass of a diene-based rubber component, 40% by mass or more of a butadiene rubber, and the butadiene rubber comprises a butadiene rubber comprising 1,2-syndiotactic polybutadiene crystal (SPB).

2. The tire of claim 1, wherein the rubber composition for a clinch apex comprises 45 to 55 parts by mass of carbon black having a DBP oil absorption of 110 ml/100 g or more based on 100 parts by mass of a diene-based rubber component, and a content percentage of carbon black in the rubber composition is 26.0 to 32.0% by mass.

**Patentansprüche**

1. Reifen, umfassend einen Wulstscheitel, der aus einer Kautschukzusammensetzung für einen Wulstscheitel aufgebaut ist, wobei die Kautschukzusammensetzung einen komplexen Elastizitätsmodul E* bei 70°C, einer Frequenz von 10 Hz und 1% Dehnung (E* (70°C)) von 6,0 bis 12,0 MPa, einen Verlustfaktor tan δ bei 70°C, einer Frequenz von 10 Hz und 1% Dehnung (tan δ (70°C)) von 0,10 oder weniger und einen tan δ bei 100°C, einer Frequenz von 10 Hz und 0,5% Dehnung (tan δ (100°C)) von 0,06 oder weniger aufweist und die folgende Gleichung (1) erfüllt:

$$\text{Gleichung (1): } \tan δ \, (70°C) \, / \, E^* \, (70°C) \times 1000 \leq 10{,}0,$$

die Kautschukzusammensetzung für einen Wulstscheitel umfasst 45 Masseteile oder mehr Kohleschwarz, bezogen auf 100 Masseteile eines Kautschukbestandteils auf Dienbasis, 40 Masse-% oder mehr eines Butadienkautschuks, und der Butadienkautschuk umfasst einen Butadienkautschuk, der 1,2-syndiotaktisches Polybutadienkristall (SPB) umfasst.

2. Reifen nach Anspruch 1, wobei die Kautschukzusammensetzung für einen Wulstscheitel 45 bis 55 Masseteile Kohleschwarz mit einer DBP-Ölabsorption von 110 ml/100 g oder mehr, bezogen auf 100 Masseteile eines Kautschukbestandteils auf Dienbasis, umfasst und der Kohleschwarzgehalt in der Kautschukzusammensetzung 26,0 bis 32,0 Masse-% beträgt.

**Revendications**

1. Pneu comprenant un apex de talon composé d'une composition de caoutchouc pour un apex de talon, la composition de caoutchouc ayant un module élastique complexe E* à 70°C, une fréquence de 10 Hz et une déformation de 1% (E* (70°C)) de 6,0 à 12,0 MPa, une tangente de perte tan δ à 70°C, une fréquence de 10 Hz et une déformation de 1% (tan δ (70°C)) de 0,10 ou moins, et tan δ à 100°C, une fréquence de 10 Hz et une déformation de 0,5% (tan δ (100°C)) de 0,06 ou moins et satisfaisant à l'équation suivante (1) :

$$\text{Équation (1) : } \tan δ \, (70°C)/E^* \, (70°C) \times 1000 \leq 10{,}0,$$

la composition de caoutchouc pour un apex de talon comprend 45 parties en masse ou plus de noir de carbone sur la base de 100 parties en masse d'un composant de caoutchouc à base de diène, 40 % en masse ou plus d'un caoutchouc butadiène, et le caoutchouc butadiène comprend un caoutchouc butadiène comprenant du cristal de polybutadiène 1,2-syndiotactique (SPB).

2. Pneu selon la revendication 1, dans lequel la composition de caoutchouc pour un apex de talon comprend 45 à 55 parties en masse de noir de carbone ayant une absorption d'huile DBP de 110 ml/100 g ou plus sur la base de 100 parties en masse d'un composant de caoutchouc à base de diène, et un pourcentage de teneur en noir de carbone dans la composition de caoutchouc est de 26,0 à 32,0 % en masse.

# FIG. 1

**EP 3 868 578 B1**

REFERENCES CITED IN THE DESCRIPTION

**Patent documents cited in the description**

- JP 2004106796 A